# EUROPÄISCHE PATENTSCHRIFT

(11) **EP 2 626 484 B1**
(45) Veröffentlichungstag und Bekanntmachung des Hinweises auf die Patenterteilung: **20.02.2019**
(21) Anmeldenummer: 12405083.2
(22) Anmeldetag: 10.08.2012
(51) Int. Cl.: E04G 21/18, H02G 3/12, B28B 23/00, H02G 3/00

(54) **Montagehilfe für Installationen in Betonwänden**
Assembly aid for installing concrete walls
Aide au montage pour installations à parois en béton

(30) Priorität: 10.02.2012 CH 1892012
(43) Veröffentlichungstag der Anmeldung: 14.08.2013
(73) Patentinhaber: Morach, Christoph, 8335 Hittnau (CH)
(72) Erfinder: Morach, Christoph, 8335 Hittnau (CH)
(74) Vertreter: Frei Patent Attorneys

(56) Entgegenhaltungen:
- CH-A5- 627 221
- JP-A- H0 369 770
- JP-A- H08 338 130
- JP-A- 2004 044 321
- JP-A- 2011 182 584
- KR-A- 20090 073 674

## Beschreibung

Die Erfindung bezieht sich auf das Gebiet der Installationstechnik, und insbesondere auf eine Montagehilfe für Installationen, insbesondere Elektroinstallationen, in Betonwänden gemäss dem Oberbegriff des Patentanspruches 1.

Eine derartige Montagehilfe für Installationen in Betonwänden ist beispielsweise aus GB 1111607 bekannt. Darin wird eine Dose für elektrische Installationen vorgestellt, welche an einer Betonarmierung montiert und dann mit Beton umgossen wird. Die Platzierung der Dose ist aber auf das Raster der Armierung beschränkt.

DE 102005051596 B4 beschreibt eine Aufnahmedose für Elektroinstallationen, welche Befestigungsflügel zur Befestigung beispielsweise an einer Armierung vor dem Betonieren aufweist. EP 2375522 A2 zeigt eine ähnliche Dose, mit einem zusätzlichen Klemmsteg als Teil eines Befestigungsflügels, welcher weitere Befestigungsmittel überflüssig macht.

WO 99/25941 zeigt ein Klemmelement zum Andrücken von Verbindungsstücken für Installationselemente an die Schalung für ein Betonbauteil. Das Klemmelement weist ein gebogenes und federndes Element auf, welches einerseits an zwei Enden an Armierungseisen und andererseits mittig an einem einzubauenden Verbindungsstück befestigt ist, und dieses gegen eine Schalung drückt.

JP H 08338130 zeigt (Fig. 23 und 24) die Montage einer einzubetonierenden Dose (40) mittels Drähten (41) an einer Armierung. Die Dose wird gemäss Fig. 21 gegen ein Anschlussrohr (44) an einer Trägerplatte (42) verschraubt.

JP 2011182584 zeigt (Fig. 3 und 4) die Montage mittels Metallblechteilen, die in einer Ebene liegen, wobei eine Dose mit einer Doppelgewindehülse verstellbar von dieser Ebene beabstandet ist.

JP 2004044321 zeigt ein flaches Blechteil mit vorstehenden Laschen, auf welche eine Dose aufgesteckt werden kann, wonach die Laschen umgebogen werden. Das Blechteil verbindet die Dose mit Armierungseisen. Es ist biegbar, so dass die Dose mittels einer Schraube, die durch die Dose hindurch in das Blechteil eingreift, gegen eine Schalung gezogen werden kann.

CH 627221 zeigt ein Verfahren zum Befestigen einer Anschlussdose an einer Armierung. Dabei wird ein streifenförmiges Lochblech in eine passende Form gebogen und an die Armierung gebunden.

KR 20090073674 zeigt ein Befestigungselement mit einem gezackten Rand sowie - wie es scheint - Stellen zum Durchschneiden eines Steges.

JP 3069770 A zeigt flächige Platten, welche dazu vorgesehen sind, einerseits an Armierungseisen befestigt zu werden und andererseits ein in Beton einzugiessendes Element zu tragen. Die Platten weisen schräge oder entlang einer Kreislinie verlaufende Stege zur Befestigung an den Armierungseisen auf.

JP 48058996 U zeigt eine Haltevorrichtung für eine Anschlussdose, welche an Armierungseisen befestigt wird. Die Haltevorrichtung weist einen kreuzförmigen Fussteil und ist mittels eines Trägers mit der Anschlussdose verbunden.

Es ist Aufgabe der Erfindung, eine Montagehilfe für Installationen in Betonwänden der eingangs genannten Art zu schaffen, welche eine Montage eines Installationselementes an Armierungselementen erlaubt und dabei eine vergleichsweise freie Platzierung des Installationselementes bezüglich der Armierungselemente zulässt. Eine weitere Aufgabe für mindestens einige Ausführungsformen ist, den Einsatz von unterschiedlichen Installationselementen zu ermöglichen. Eine weitere Aufgabe für mindestens einige Ausführungsformen ist, Ungenauigkeiten in der Lage der Armierungselemente auszugleichen.

Diese Aufgabe löst eine Montagehilfe für Installationen in Betonwänden mit den Merkmalen des Patentanspruches 1.

Die Montagehilfe für Installationen in Betonwänden weist mindestens ein Befestigungselement zur Befestigung der Montagehilfe an Armierungselementen auf, ein Führungselement zur Befestigung eines Installationselementes, und mindestens ein Distanzierungselement, welches das Führungselement mit dem mindestens einen Befestigungselement verbindet und dadurch trägt. Das Führungselement erlaubt den Einsatz unterschiedlicher Installationselemente wie beispielsweise Dosen für Elektroinstallationen.

Am Führungselement oder Führungsrohr sind also Anschlussdosen mit einer Aufstecköffnung aufsteckbar. Solche Anschlussdosen sind in der Anmeldung EP 2367251 A1 desselben Anmelders beschrieben. Es sind auch die in diesem Dokument erwähnten Montageplatten aufsteckbar. Solche Montageplatte sind für das Aufschrauben oder Aufnageln von weiteren Installationselementen vorgesehen. Dieses Dokument offenbart die Merkmale des Oberbegriffs von Patentanspruch 1.

Erfindungsgemäss weist ein Installationselement mindestens zwei Befestigungselemente auf, wobei das Installationselement zwischen den mindestens zwei Befestigungselementen angeordnet ist. Genauer gesagt können dabei die mindestens zwei Befestigungselemente in einer Ebene ausgedehnt sein - wobei sie dadurch vorgesehen sind, an Armierungselementen befestigt zu werden, welche parallel zu dieser Ebene verlaufen - wobei das Installationselement in dieser Ebene zwischen den mindestens zwei Befestigungselementen angeordnet ist.

In einer Ausführungsform erstreckt sich von einem Befestigungselement ausgehend jeweils ein Distanzierungselement im wesentlichen normal zur genannten Ebene, und ein vom Befestigungselement entferntes Ende des Distanzierungselementes mit dem Verbindungsbereich verbunden ist, wobei sich der Verbindungsbereich im wesentlichen parallel zur genannten Ebene erstreckt, und sich das Führungselement im wesentlichen normal zur genannten Ebene, vom Verbindungselement ausgehend, erstreckt.

Es ist also das Führungselement mittels eines Verbindungsbereichs mit dem mindestens einen Distanzierungselement verbunden. Dieser Verbindungsbereich kann beispielsweise eine Platte sein.

In einer Ausführungsform erstrecken sich das mindestens eine Distanzierungselement und das Führungselement, ausgehend vom Verbindungsbereich, in entgegen gesetzte Richtungen. Anders gesagt ist dabei der Verbindungsbereich, entlang einer Richtung normal zur genannten Ebene, zwischen dem Führungselement und dem oder den Befestigungselementen angeordnet. Oder noch einmal anders kann gesagt werden, dass das Führungselement der genannten Ebene bezüglich des Verbindungsbereiches gegenüberliegend angeordnet ist. Die Distanzierungselemente hingegen erstrecken sich, vom Verbindungselement ausgehend, zu der genannten Ebene hin. Das Führungselement erstreckt sich vom Verbindungselement ausgehend, von der genannten Ebene weg.

In einer Ausführungsform weist die Montagehilfe mindestens zwei Befestigungselemente auf, welche einander bezüglich des Führungselementes gegenüber liegend angeordnet sind und jeweils über ein eigenes Distanzierungselement mit dem Führungselement verbunden sind. Die Befestigungselemente sind insbesondere symmetrisch bezüglich des Führungselementes angeordnet. Das Führungselement kann beispielsweise ein Führungsrohr sein, auf oder in welches das Installationselement steckbar ist. Die Distanzierungselemente verlegen ein Ende des Führungselementes hinter eine Ebene der Befestigungselemente und damit einer Ebene der Armierungselemente. Die Distanzierungselemente schaffen dadurch einen Abstand zwischen dem Ende des Führungselementes und einer zu montierenden Schalplatte, und schaffen damit auch Raum für das Installationselement.

In einer Ausführungsform ist vom Führungselement aus gesehen in zwei einander gegenüberliegende Richtungen parallel zu einer Ebene der Armierungselemente jeweils ein Befestigungselement angeordnet, und liegen in zwei senkrecht zu diesen Richtungen parallel zur Ebene der Armierungselemente verlaufenden weiteren Richtungen *keine* Befestigungselemente vor. Dadurch bleibt der Bereich ohne Befestigungselemente frei (bis auf die Armierung), so dass von Hand Installationsrohre zum Installationselement geführt werden können. Die Ebene der Armierungselemente kann auch Montageebene oder Armierungsebene genannt werden. Diese Ebene ist üblicherweise auch parallel zu der Ebene der betreffenden zu betonierenden Wand oder Decke.

In einer Ausführungsform weisen das Distanzierungselement respektive die Distanzierungselemente federnde Abschnitte auf. Insbesondere weisen die federnden Abschnitte in eine Richtung senkrecht zu einer Ebene der Armierungselemente eine grössere Elastizität auf als die übrigen Abschnitte der Distanzierungselemente. Diese grössere Elastizität kann durch die Zusammensetzung und/oder die Form dieser Abschnitte realisiert sein. Durch diese Elastizität kann bei Druck in Richtung senkrecht zur Armierungsebene respektive Wand- oder Deckenebene das Führungselement nachgeben. Beim Einschalen wird dabei ein auf den Führungselement aufgesetztes Installationselementes, beispielsweise eine Installationsdose, gegen die Schalung gedrückt. Nach dem Giessen des Betons und dem Ausschalen befindet sich das Installationselement in der gewünschten Position, fluchtend mit der Oberfläche der Wand oder Decke.

In einer Ausführungsform sind das Befestigungselement respektive die Befestigungselemente in einer Ebene ausgedehnt und sind dadurch vorgesehen, an Armierungselementen, insbesondere Armierungseisen, befestigt zu werden, welche parallel zu dieser Ebene verlaufen.

In einer Ausführungsform verläuft die Richtung, in welcher die federnde Abschnitte die grössere Elastizität aufweisen als die übrigen Abschnitte der Distanzierungselemente, im Wesentlichen senkrecht zu der genannten Ebene. Damit ist die Montagehilfe in der Kompressionsrichtung durch die Schalung nachgiebig, in andern Richtungen aber nicht. Dies ist mit Blick auf die mechanische Belastung beim Einfüllen des Betons und beim Verdichten von Vorteil.

In einer Ausführungsform weisen das Befestigungselement respektive die Befestigungselemente Stege auf, welche mit Befestigungshilfsmitteln an Armierungselementen befestigbar sind, insbesondere, indem ein Steg mittels eines Befestigungshilfsmittels an einem Armierungselementen festgebunden wird. Die Stege verlaufen typischerweise parallel zur Armierungsebene. Die Befestigungshilfsmittel sind beispielsweise Drähte oder Kabelbinder.

In einer Ausführungsform sind vorstehende Elemente, insbesondere Nocken, an den Stegen angeordnet. Die vorstehenden Elemente verhindern, dass ein um einen Teil des Befestigungselementes geschlungenes Befestigungshilfsmittel sich entlang dieses Teiles verschieben kann. Nocken können in eine beliebige Richtung ausgedehnt sein, vorzugsweise aber in einer Ebene des Befestigungselementes. Die vorstehenden Elemente können aber auch Scheiben, sein, die quer zum Verlauf eines Steges des Befestigungselementes angeordnet sind, oder verdickte Abschnitte eines Steges. In einer weiteren Ausführungsform liegen zusätzlich oder anstelle der Nocken Löcher in den Befestigungselementen respektive in den Stegen vor.

Erfindungsgemäß, ist ein Installationselement in verschiedenen Positionen entlang des Führungselementes montierbar ist. Dazu kann das Installationselement beispielsweise mit einer Bewegung normal zur Montageebene auf oder in das Führungselement gesteckt werden und mit einer Fixierschraube arretiert werden, oder das Installationselement kann seitlich, mit einer Bewegung parallel zur Montageebene auf das Führungselement gesteckt werden. Damit ist es möglich, entsprechend unterschiedlichen Abständen zwischen Armierung und Schalung respektive der fertigen Betonoberfläche das Installationselement passend zu montieren.

In einem Verfahren zur Verwendung der Montagehilfe wird die Montagehilfe zur Befestigung an einem Armierungsgitter oder an Armierungseisen an das Armierungsgitter respektive das Armierungseisen gelegt, wobei vorzugsweise mindestens einer der Stege oder ein Abschnitt eines der Stege nicht parallel zu Stangen des Armierungsgitters respektive den Armierungseisen verläuft. Dann werden die Stege mittels Befestigungshilfsmitteln am Armierungsgitter respektive den Armierungseisen festgebunden. Durch den nicht parallelen (also schrägen) Verlauf der Stege bezüglich der Stangen des Armierungsgitters respektive der Armierungseisen ist gesichert, dass die Stege die Stangen respektive Eisen kreuzen und somit Befestigungspunkte vorliegen.

Dabei kann der Abstand des Installationselements bezüglich der Armierung so gewählt werden, dass das Installationselement um einen vorgegebenen Abstand über die Ebene der Schalung vorsteht. In der Folge wird beim Einschalen das Installationselement um diesen Abstand in die Wand hinein gedrückt und die Montagehilfe, insbesondere der oder die federnden Abschnitte, entsprechend verformt. Dadurch stellt sich eine Gegenkraft ein, welche das Installationselement gegen die Schalung gedrückt hält. Durch die Wahl des vorgegebenen Abstands ist diese Gegenkraft einstellbar.

Weitere bevorzugte Ausführungsformen gehen aus den abhängigen Patentansprüchen hervor.

Im folgenden wird der Erfindungsgegenstand anhand von beispielhaften Ausführungsformen, welche in den beiliegenden Zeichnungen dargestellt sind, näher erläutert. Es zeigen jeweils schematisch:
- Figur 1: eine Ansicht einer Montagehilfe;
- Figur 2: die Montagehilfe mit einer Dose, an einer Armierung montiert;
- Figur 3 und 4: die Montagehilfe mit Dose;
- Figur 5: eine nicht erfindungsgemäße Montagehilfe ohne Führungsrohr;
- Figuren 6 - 8: verschiedene Formen von Befestigungselementen; und
- Figuren 9-11: eine andere Ausführungsform der Montagehilfe, mit einsteckbarer Platte oder Dose.

Grundsätzlich sind in den Figuren gleiche Teile mit gleichen Bezugszeichen versehen.

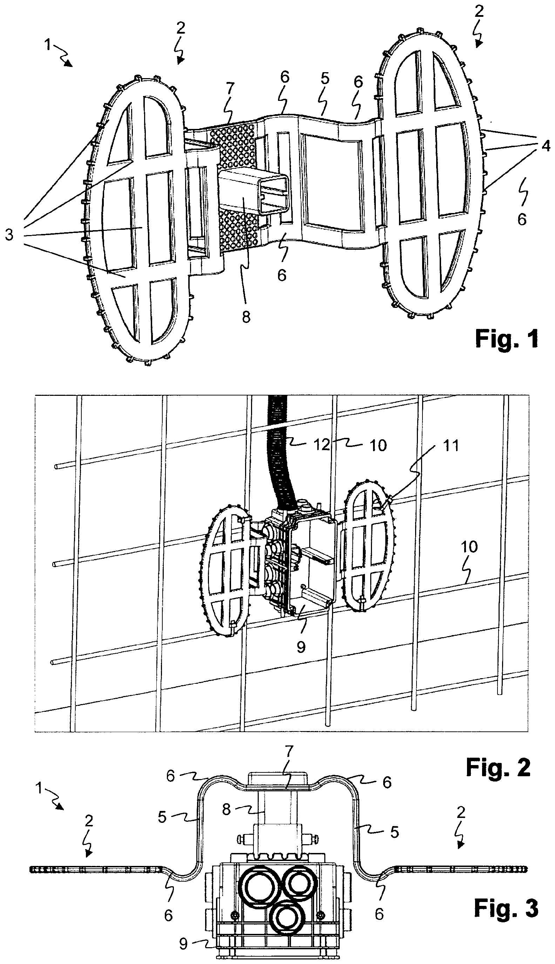

**Figur 1** zeigt eine Ansicht einer Montagehilfe 1, aufweisend: zwei Befestigungselemente 2, welche jeweils über ein Distanzierungselement 5 mit einer mittig angeordneten Platte 7 (auch Grundplatte genannt) und einem darauf angeordneten Führungselement oder Führungsrohr 8 verbunden sind. Die Platte 7 bildet einen Verbindungsbereich zwischen den Distanzierungselementen 5 und dem Träger 8. Auf das Führungsrohr 8 ist ein Installationselement 9, beispielsweise eine Unterputzdose mit einer zur Form des Führungsrohres 8 korrespondierenden Aufstecköffnung auf- oder einsteckbar.

Nicht erfindungsgemäß, ist das Führungsrohr 8 weggelassen und liegt nur die Platte 7 als flache Montageplatte für beliebige Installationselemente vor. Dazu kann die Platte 7 eine Loch- oder Wabenstruktur aufweisen, die es erleichtert, Schrauben einzudrehen.

Die Distanzierungselemente 5 weisen einen oder mehrere federnde Abschnitte 6 auf. Diese erzeugen in der hier gezeigten Ausführungsform aufgrund ihrer Form eine Nachgiebigkeit in Richtung der Distanzierungselemente 5.

Die Befestigungselemente 2 weisen mehrere Stege 3 auf. Wird die Montagehilfe 1 in einer gewünschten Position auf Armierungsgitter oder -Eisen gelegt, so kreuzen die Stege 3 die Stäbe des Gitters respektive die Armierungseisen 10 **(****Figur 2****).** Diese Kreuzungspunkte bilden Befestigungspunkte, an denen die Montagehilfe 1 befestigt werden kann, beispielsweise indem Montagehilfsmittel 11 wie Drähte oder Kabelbinder um den Steg 3 und die Stäbe geschlungen werden. Damit die Stege 3 anschliessend nicht verrutschen, können sie Nocken 4 aufweisen. Diese verlaufen quer zur Richtung der Stege 3. In anderen Ausführungsformen entsprechen den Nocken Verdickungen der Stege 3, die sich mit dünneren Stellen abwechseln. In der Figur 2 ist eine Dose 9 für Elektroinstallationen auf die Montagehilfe 1 aufgesteckt und ein Installationsrohr 12 in die Dose 9 eingesteckt.

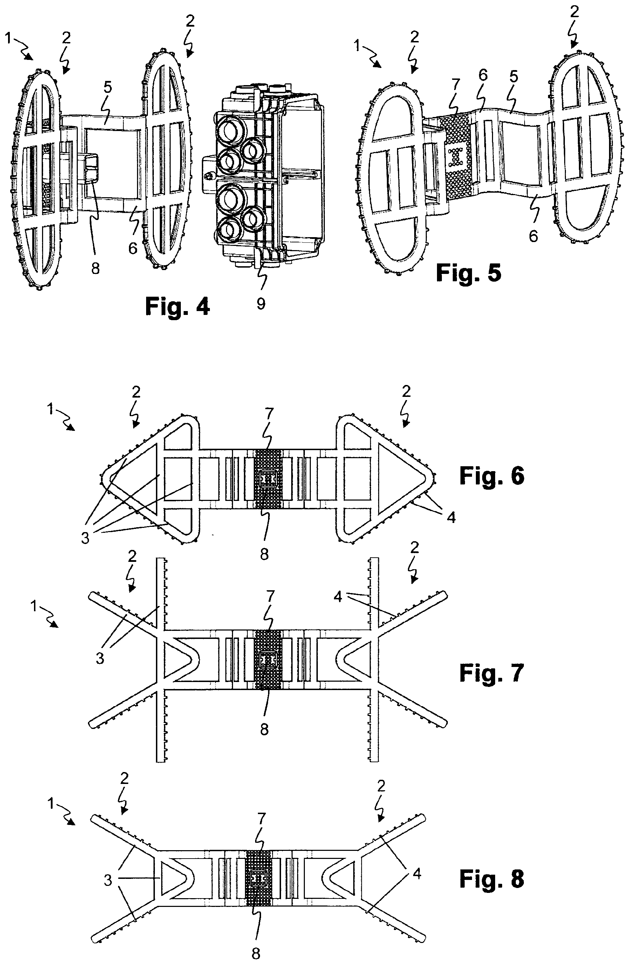

**Figur 3** und **4** zeigen die Montagehilfe 1 mit einer Dose 9 in einer Aufsicht und einer Explosionszeichnung. In der **Figur 3** sind die federnden Abschnitte 6 gut erkennbar.

**Figur 5** zeigt eine nicht erfindungsgemäße Montagehilfe ohne Führungsrohr, nur mit einer Platte 7 zur Montage von beliebigen Installationselementen durch beispielsweise Schrauben oder Nägel.

Damit sich ungeachtet der Lage der Montagehilfe 1 brauchbare Kreuzungspunkte mit den Armierungseisen 10 oder Gittern ergibt, können mindestens einzelne der Stege 3 in einem Winkel zwischen 20° und 70°, insbesondere von 45° zu einer Spiegelsymmetriachse der Montagehilfe 1 verlaufen. Beispielhafte Verläufe sind in den **Figuren 6** bis **8** dargestellt.

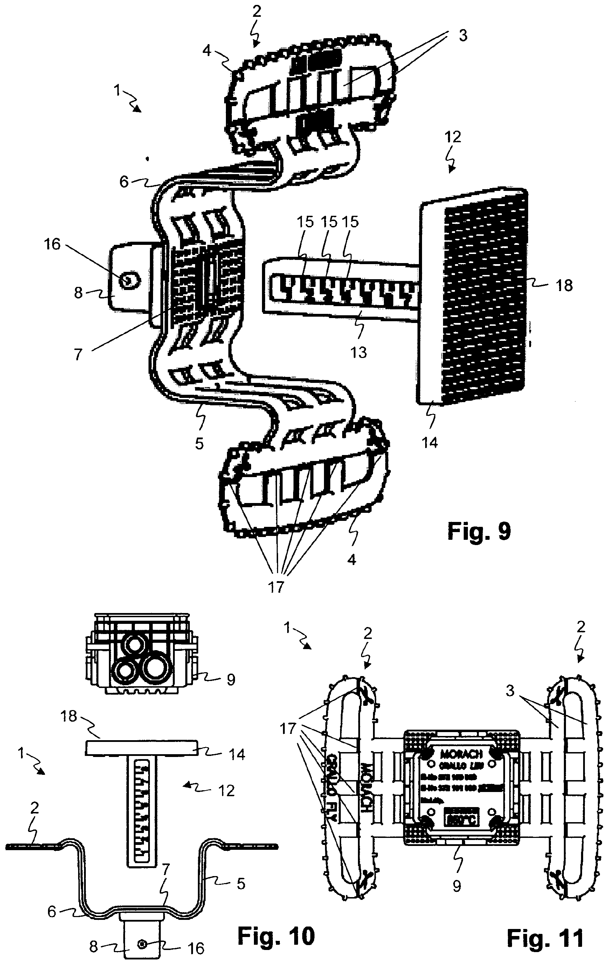

**Figuren 9** bis **11** zeigen eine weitere Ausführungsform der Montagehilfe- Auch hier ist ein Installationselement wie eine Dose 9 oder ein Trägerelement 12 mittels eines Trägers 13 einsteckbar. In diesen Figuren ist eine Dose 9 als separates, auf ein Trägerelement aufsetzbares, beispielsweise aufschraubbares Element dargestellt, es ist aber auch ein Dose mit einem angeformten Träger 13, analog zu den Ausführungsformen der Figuren 3 und 4 einsetzbar, wobei der Träger in das Führungsrohr 8 einsteckbar ist. Ein Trägerelement 12 weist nebst einem Träger 13 eine Montageplatte 14, beispielsweise mit einer Loch- oder Wabenstruktur in einer Montagefläche 18 auf. Die Montagefläche 18 der Montageplatte 14 liegt im wesentlichen parallel zur Montageebene. Träger 13 und Führungsrohr 8 weisen ineinander passende Querschnitte auf, beispielsweise im wesentlichen rechteckig, quadratisch, oval, rund oder polygonal geformte Querschnitte. Mit einer am Führungsrohr 8 angeformten Schraubenführung 16 kann eine Arretierschraube durch das Führungsrohr 8 gegen einen eingesteckten Träger 13 geschraubt werden.

In dieser Ausführungsform ist das Führungsrohr 8 von der Platte 7 aus nach hinten gerichtet, also von den Befestigungselementen 2 respektive von einer Ebene der Befestigungselemente weg. Mit anderen Worten in eine entgegen gesetzte Richtung als die Distanzierungselemente 5.

Der Träger 13 des Installationselementes 9 respektive des Trägerelementes 12 ist somit in das Führungsrohr 8 einsteckbar und verschiebbar und bis gegen die Platte 7 schiebbar. Es kann die Position des Installationselementes 9 entlang des Führungsrohres 8 mit einem Fixierelement, beispielsweise einer Fixierschraube, arretiert werden.

Der Träger 13 kann in einer im Wesentlichen beliebigen Position entlang des Führungsrohres 8 positionierbar und arretierbar sein, oder es kann der Träger 13 und/oder das Führungsrohr 8 einen Anschlag aufweisen, der die Bewegung beim Einstecken begrenzt.

Der Träger 13 kann entlang seiner Längsrichtung eine Bemassung 15 aufweisen. Damit ist es möglich, die Träger 13 einer Reihe von Installationselementen 9 oder Trägerelementen 12 auf die gleiche Länge abzulängen. Wenn ein Anschlag wie oben beschrieben vorliegt, so weisen die so abgelängten Träger 13 nach dem Einstecken bis zum Anschlag alle die gleiche Position des Installationselementes 9 oder Trägerelementes 12 bezüglich der Platte 7 und den Befestigungselementen 2 auf.

Zusätzlich zu den bereits gezeigten Elementen sind hier noch die folgenden Elemente gezeigt (diese Elemente können auch mit der vorigen Ausführungsform kombiniert werden): Die Befestigungselemente 2 sind, in der Montageebene gesehen, relativ schmal, beispielsweise weniger als 5 cm, 4 cm oder 3 cm breit. Dadurch können die Montagehilfen 1 relativ nahe an anderen Elementen, beispielsweise einem Türsturz, positioniert werden. Gemäss einer Ausführungsform liegen zudem Abtrennkerben 17 vor, d.h. Einkerbungen oder dünnere Stellen an den Stegen 3. Diese vereinfachen das Abschneiden der Stege 3 entlang dieser Kerben 17, wodurch bei Bedarf die Befestigungselemente 2 noch schmaler gemacht werden können.

Auch hier ist mindestens ein Abschnitt der Befestigungselemente 2, in der Montageebene gesehen, schräg oder gebogen ausgebildet. Dadurch können die Befestigungselemente 2 besser an beliebig verlaufenden Armierungseisen 10 befestigt werden.

## Patentansprüche

1. Montagehilfe (1) für Installationen in Betonwänden, aufweisend mindestens ein Installationselement (9), ein Befestigungselement (2) zur Befestigung der Montagehilfe (1) an Armierungselementen (10), ein Führungselement (8) zur Befestigung des Installationselementes (9), und mindestens ein Distanzierungselement (5), welches das Führungselement (8) mit dem mindestens einen Befestigungselement (2) verbindet und dadurch trägt, wobei
- das Führungselement (8) ein Rohr ist, auf oder in welches das Installationselement steckbar und in verschiedenen Positionen entlang des Führungselementes montierbar ist, und
- die Montagehilfe (1) mindestens zwei Befestigungselemente (2) aufweist, wobei das Installationselement (9) zwischen den mindestens zwei Befestigungselementen (2) angeordnet ist,
wobei die mindestens zwei Befestigungselemente (2) in einer Ebene ausgedehnt sind **dadurch gekennzeichnet, dass** die Befestigungselemente (2) dadurch vorgesehen sind an Armierungselementen (10) befestigt zu werden, welche parallel zu dieser Ebene verlaufen, und
wobei das Installationselement (9) in dieser Ebene zwischen den mindestens zwei Befestigungselementen (2) angeordnet ist.

2. Montagehilfe (1) gemäss Anspruch 1, wobei sich von einem Befestigungselement (2) ausgehend jeweils ein Distanzierungselement (5) im wesentlichen normal zur genannten Ebene erstreckt, und ein vom Befestigungselement (2) entferntes Ende des Distanzierungselementes (7) mit einem Verbindungsbereich verbunden ist, wobei sich der Verbindungsbereich im wesentlichen parallel zur genannten Ebene erstreckt, und sich das Führungselement (8) im wesentlichen normal zur genannten Ebene, vom Verbindungselement ausgehend, erstreckt.

3. Montagehilfe (1) gemäss einem der Ansprüche 1 oder 2, wobei das mindestens eine Distanzierungselement (5) und das Führungselement (8), ausgehend von einem Verbindungsbereich, mittels dessen sie miteinander verbunden sind, sich in entgegen gesetzte Richtungen erstrecken.

4. Montagehilfe (1) gemäss Anspruch 3, wobei der Verbindungsbereich, entlang einer Richtung normal zur genannten Ebene, zwischen dem Führungselement (8) und dem oder den Befestigungselementen (2) angeordnet ist.

5. Montagehilfe (1) gemäss Anspruch 3 oder 4 in Abhängigkeit von Anspruch 2, wobei sich das Führungselement (8) vom Verbindungsbereich ausgehend, von der genannten Ebene weg erstreckt.

6. Montagehilfe (1) gemäss einem der Ansprüche 1 bis 5, wobei das Installationselement (9) eine Montageplatte (14) zum Aufschrauben oder Aufnageln von weiteren Installationselementen aufweist.

7. Montagehilfe (1) gemäss einem der Ansprüche 1 bis 6, aufweisend mindestens zwei Befestigungselemente (2) welche einander bezüglich des Führungselementes (8) gegenüber liegend angeordnet sind und jeweils über ein eigenes Distanzierungselement (5) mit dem Führungselement (8) verbunden sind.

8. Montagehilfe (1) gemäss Anspruch 7, wobei, vom Führungselement (8) aus gesehen in zwei einander gegenüberliegende Richtungen parallel zu einer Ebene der Armierungselemente (10) jeweils ein Befestigungselement (2) angeordnet ist, und in zwei senkrecht zu diesen Richtungen parallel zur Ebene der Armierungselemente (10) verlaufenden weiteren Richtungen *keine* Befestigungselemente (2) vorliegen.

9. Montagehilfe (1) gemäss einem der vorangehenden Ansprüche, wobei das Befestigungselement (2) respektive die Befestigungselemente (2) Stege (3) aufweisen, welche mit Befestigungshilfsmitteln (11) an Armierungselementen (10) befestigbar sind, insbesondere, indem ein Steg (3) mittels eines Befestigungshilfsmittels (11) an einem Armierungselementen (10) festgebunden wird.

10. Montagehilfe (1) gemäss Anspruch 9, wobei die Stege (3) jeweils quer zu ihrer Richtung verlaufende Einkerbungen (17) aufweisen, welche ein Durchschneiden des jeweiligen Steges (3) erleichtern.

11. Montagehilfe (1) gemäss Anspruch 9 oder 10, wobei vorstehende Elemente, insbesondere Nocken (4), an den Stegen (3) angeordnet sind.

12. Montagehilfe (1) gemäss einem der Ansprüche 1 bis 11, wobei das Installationselement (9) mit einer Bewegung normal zur Montageebene auf oder in das Führungselement (8) steckbar ist und mit einer Fixierschraube arretierbar ist, und das Installationselement (9) in verschiedenen Positionen entlang des Führungselementes (8) montierbar und arretierbar ist.

## Claims

1. An mounting aid (1) for installations in concrete walls, comprising at least one installation element (9), a fastening element (2) for fastening the mounting aid (1) to reinforcement elements (10), a guide element (8) for fastening the installation element (9), and at least one distancing element (5) which connects the guide element (8) to the at least one fastening element (2) and carries it on account of this, wherein
- the guide element (8) is a tube, onto or into which the installation element can be plugged and assembled in different positions along the guide element, and
- the mounting aid (1) comprises at least two fastening elements (2), wherein the installation element (9) is arranged between the at least two fastening elements (2), wherein the at least two fastening elements (2) are extended in a plane,
**characterised in that** the fastening elements (2), by way of this, are provided for being fastened to reinforcement elements (10) which run parallel to this plane, and wherein the installation element (9) is arranged in this plane between the at least two fastening elements (2).

2. An mounting aid (1) according to claim 1, wherein departing from a fastening element (2), a distancing element (5) extends essentially orthogonally to the mentioned plane, and an end of the distancing element (7) which is remote from the fastening element (2) is connected to a connection region, wherein the connection regions extends essentially parallel to the mentioned plane, and departing from the connection element, the guide element (8) extends essentially orthogonally to the mentioned plane.

3. An mounting aid (1) according to one of the claims 1 or 2, wherein the at least one distancing element (5) and the guide element (8), departing from a connection region, by way of which they are connected to one another, extend in opposite directions.

4. An mounting aid (1) according to claim 3, wherein the connection region along a direction normal to the mentioned plane is arranged between the guide element (8) and the fastening element or elements (2).

5. An mounting aid (1) according to claim 3 or 4 in dependence on claim 2, wherein departing from the connection region, the guide element (8) extends away from the mentioned plane.

6. An mounting aid (1) according to one of the claims 1 to 5, wherein the installation element (9) comprises an assembly plate (14) for screwing or nailing on further installation elements.

7. An mounting aid (1) according to one of the claims 1 to 6, comprising at least two fastening elements (2) which are arranged lying opposite one another with respect to the guide element (8) and are each connected to the guide element (8) via their own distancing element (5).

8. An mounting aid (1) according to claim 7, wherein seen from the guide element (8), a fastening element (2) is arranged parallel to a plane of the reinforcement elements (10) each in two directions which are opposite to one another, and *no* fastening elements (2) are present in two further directions which run parallel to the plane of the reinforcement elements (2) perpendicularly to these directions.

9. An mounting aid (1) according to one of the preceding claims, wherein the fastening element (2) or the fastening elements (2) comprise webs (3) which with fastening aid means (11) can be fastened onto reinforcement elements (10), in particular by way of a web (3) being fixedly connected to a reinforcement element (1) by way of a fastening aid means (11).

10. An mounting aid (1) according to claim 9, wherein the webs (3) each comprise notches (17) which each run transversely to their direction and which simplify the cutting-through of the respective web (3).

11. An mounting aid (1) according to claim 9 or 10, wherein projecting elements, in particular lobes (4), are arranged on the webs (3).

12. An mounting aid (1) according to one of the claims 1 to 11, wherein the installation element (9) can be stuck onto or into the guide element (8) by a movement normal to the assembly plane and can be arrested with a fixation screw, and the installation element (9) can be assembled and arrested in different positions along the guide element (8).

## Revendications

1. Accessoire de montage (1) pour installations prévues dans des parois en béton, présentant au moins un élément d'installation (9), un éléments de fixation (2) destiné à fixer l'accessoire de montage (1) sur des éléments d'armature (10), un élément de guidage (8) destiné à fixer l'élément d'installation (9) et au moins un élément d'écartement (5) qui relie l'élément de guidage (8) à l'élément ou aux éléments de fixation (2) et ainsi le soutient,
l'élément de guidage (8) étant un tube sur ou dans lequel l'élément d'installation peut être enfiché et monté en différentes positions le long de l'élément de guidage et
l'accessoire de montage (1) présentant au moins deux éléments de fixation (2), l'élément d'installation (9) étant disposé entre les deux ou plusieurs éléments de fixation (2),
les deux ou plusieurs éléments de fixation (2) s'étendant dans un plan,
**caractérisé en ce que**
les éléments de fixation (2) sont prévus pour être fixés sur des éléments d'armature (10) qui s'étendent parallèlement à ce plan et **en ce que** l'élément d'installation (9) est disposé dans ce plan entre les deux ou plusieurs éléments de fixation (2).

2. Accessoire de montage (1) selon la revendication 1, dans lequel partant d'un élément de fixation (2), chaque élément d'écartement (5) s'étend essentiellement à la perpendiculaire dudit plan, une extrémité de l'élément d'écartement (7) éloignée de l'élément de fixation (2) étant reliée à une partie de liaison, la partie de liaison s'étendant essentiellement parallèlement audit plan, l'élément de guidage (8) s'étendant essentiellement à la perpendiculaire dudit plan en partant de l'élément de liaison.

3. Accessoire de montage (1) selon l'une des revendications 1 ou 2, dans lequel le ou les éléments d'écartement (5) et l'élément de guidage (8) s'étendent dans des directions mutuellement opposées partant d'une partie de liaison au moyen de laquelle ils sont reliés l'un à l'autre.

4. Accessoire de montage (1) selon la revendication 3, dans lequel la partie de liaison est disposée dans une direction perpendiculaire audit plan entre l'élément de guidage (8) et le ou les éléments de fixation (2).

5. Accessoire de montage (1) selon la revendication ou la revendication 4 dans la mesure où elle est subordonnée à la revendication 2, dans lequel l'élément de guidage (8) s'éloigne dudit plan en partant de la partie de liaison.

6. Accessoire de montage (1) selon l'une des revendications 1 à 5, dans lequel l'élément d'installation (9) présente une plaque de montage (14) qui permet de visser ou de clouer d'autres éléments d'installation.

7. Accessoire de montage (1) selon l'une des revendications 1 à 6, présentant au moins deux éléments de fixation (2) disposés l'un en face de l'autre par rapport à l'élément de guidage (8) et reliés chacun à l'élément de guidage (8) par l'intermédiaire d'un élément d'écartement (5) propre.

8. Accessoire de montage (1) selon la revendication 7, dans lequel, vu de l'élément de guidage (8), un élément de fixation (2) est disposé dans deux directions mutuellement opposées et parallèles à un plan des éléments d'armature (10) et dans lequel aucun élément de fixation (2) n'est présent dans deux autres directions qui s'étendent perpendiculairement à ces directions et parallèles au plan des éléments d'armature (10).

9. Accessoire de montage (1) selon l'une des revendications précédentes, dans lequel l'élément de fixation (2) ou les éléments de fixation (2) présentent une traverse (3) qui peut être fixée par des accessoires de fixation (11) sur des éléments d'armature (10), et en particulier en reliant une traverse (3) à un élément d'armature (10) au moyen d'un accessoire de fixation (11).

10. Accessoire de montage (1) selon la revendication 9, dans lequel les traverses (3) présentent chacune des entailles (17) qui s'étendent transversalement par rapport à leur direction et qui facilitent la découpe de ladite traverse (3).

11. Accessoire de montage (1) selon l'une des revendications 9 ou 10, dans lequel des éléments en saillie, en particulier des bosses (4), sont disposés sur les traverses (3).

12. Accessoire de montage (1) selon l'une des revendications 1 à 11, dans lequel l'élément d'installation (9) peut être enfiché sur ou dans l'élément de guidage (8) dans un déplacement perpendiculaire au plan de montage et peut être bloqué par une vis de fixation, et dans lequel l'élément d'installation (9) peut être monté et bloqué en différentes positions le long de l'élément de guidage (8) .
